# NEW EUROPEAN PATENT SPECIFICATION

(11) **EP 1 185 757 B2**
(45) Date of publication and mention of the opposition decision: **05.03.2008**
(45) Mention of the grant of the patent: 17.09.2003
(21) Application number: 00938635.0
(22) Date of filing: 12.05.2000
(51) Int. Cl.: E06B 1/26, E06B 3/20

(54) **PROFILE**
PROFIL
PROFIL

(30) Priority: 09.06.1999 SE 9902151
(43) Date of publication of application: 13.03.2002
(73) Proprietor: Borealis Technology Oy, 06101 Porvoo (FI)
(72) Inventor: SCHIESSER, Stefan, A-4060 Leonding (AT); BRENNER, Egon, A-4600 Wels (AT); RUEMER, Franz, A-4222 St. Georgen/Gusen (AT); EBNER, Karl, S-431 38 Mölndal (SE)
(74) Representative: Vartiala, Pilvi Sisko
(86) International application number: PCT/EP2000/004291
(87) International publication number: WO 2000/077335

(56) References cited:
- EP-A- 0 087 515
- EP-A- 0 519 725
- EP-A- 0 573 862
- EP-A- 0 877 039
- EP-B- 0 278 470
- EP-B- 0 438 068
- EP-B- 0 457 455
- EP-B- 0 791 609
- WO-A-96/11216
- WO-A-98/18865
- WO-A-99/35430
- DE-A- 4 330 661
- DE-B- 3 825 796
- DE-C- 3 825 796
- JP-A- 6 038 448
- JP-A- 6 038 449
- Plastverarbeiter 42, 1991, no. 10, pp. 39-42
- Basell-Polyolefins, Datenblatt Moplen EP 240H und Datenblatt Novolen-Nomenklatur, 09/2001
- Die Kunststoffe und ihre Eigenschaften, Springer, 1998, p. 178-227
- Oekoinstitut Freiburg, Substitution von PVC bei Kunststoff-Fensterprofilen, Peter Betzner, February 1994, p. 1-50
- Plasteverarbeiter 32, Jahrgang 1981, no. 12, pp. 1629-1633
- Polypropylene Handbook, S. Dwyer et al.: Compounded Polypropylene Products, Hanser 1996, p. 209-235
- Guete- und Pruefbestimmungen, Pruefverfahren "Pruefverfahren fuer Kunststoff-Fensterprofile"

## Description

### Field of the Invention

The present invention relates to a profile and more particularly to a window profile of a thermoplastic moulding compound for windows or doors.

### Technical Background

Window profiles, such as window frames, window casements, and door profiles, such as door frames, and similar parts of windows and doors have been made of wood for several hundred years. During the past decades profiles of polymer materials, more particularly polyvinyl chloride (PVC) have replaced profiles of wood to an increasing degree.

Although PVC has many advantages as a material for window and door profiles, it also has several disadvantages. Thus, for such profiles rigid or hard PVC is preferably used. However, PVC loses its rigidity rather rapidly at increased temperatures. Also, to enhance the impact resistance impact modifying agents are often added to PVC which have an adverse effect on its rigidity and its heat distortion resistance. Further, PVC is not a preferred material from an environmental point of view.

In view of the disadvantages of PVC, suggestions have been made to replace it with other polymer materials, but so far none of the suggested replacement materials has been quite satisfying. Important properties of a replacement material for window and door profiles are stiffness, impact resistance, and easy joining of the corners of the profiles. When using plastic materials the joining of the profiles is preferably made by welding.

One proposed replacement material is polypropylene plastic. It has not been possible, however, to combine the desired stiffness on the one hand with the desired impact resistance and weldability on the other hand. When using e.g. a propylene random copolymer, the desired stiffness may be achieved by adding a relatively large amount of filler, such as talc, but this leads to a reduction of impact resistance and weldability. A propylene homopolymer on the other hand may have sufficient stiffness and weldability, but lacks sufficient impact resistance. Stiffness and impact resistance may be increased by adding reinforcing materials, such as glass fibres, but this leads to deterioration of the weldability and also to increased wear on the equipment for making the profile, such as the extruder barrel and screw.

As an example of a suggested replacement polymer material for profiles of PVC, German Patent DE 38 25 796 may be mentioned, which discloses a moulding compound for window and door frames. This moulding compound comprises 100 parts by weight of polypropylene and/or a propylene copolymer; 6-28 parts by weight of EPDM and/or EPM; 0-49 parts by weight of polyethylene and/or an ethylene copolymer; 1-8 parts by weight of glass fibres; 20-45 parts by weight of talc; 7-15 parts by weight of titanium dioxide; and 0.5-2 parts by weight of polyolefin stabilisers. The moulding compound is extruded into a window profile, and the profile has a modulus of elasticity of more than 2000 N/mm², and a percentage of less than 14 % by volume of glass fibres, talc and titanium dioxide.

It is stated in the German patent that a conventional window profile of impact modified PVC has a modulus of elasticity of about 2400 N/mm² at 23°C and that the polyolefin polymers used according to the German patent cover a range of 700-1400 N/mm² only. To obtain a higher modulus of elasticity, reinforcing additives in the form of glass fibres and talc must be added. These additives, however, impair the mechanical characteristics at low temperatures as well as the weldability of the profile and cause increased wear on the extruder when making the profiles. In order to enhance the mechanical characteristics at low temperatures, EPDM and/or EPM is added, which however deteriorate the stiffness and the weldability of the profile.

It is obvious that there is a need for further improvements with regard to window and door profiles of non-PVC polymer materials.

### Summary of the Invention

It is an object of the present invention to provide a window or door profile, such as a window frame or casement or a door frame of a polyolefin material which ameliorates or eliminates the disadvantages of the prior art.

It is another object of the present invention to provide a window or door profile with a good weldability.

It is still another object of the present invention to provide a window or door profile with a high stiffness.

It is yet another object of the present invention to provide a window or door profile with a high impact resistance.

It is a further object of the present invention to provide a window or door profile with a high heat distortion resistance.

According to the present invention these and other objects are achieved by making the window or door profile of a thermoplastic moulding compound which comprises a propylene block copolymer.

More particularly, the present invention provides a profile of a thermoplastic moulding compound for windows and doors, characterised in that the thermoplastic moulding compound comprises a propylene block copolymer a nucleating agent and from 5 to 18 % by weight of a filler, which filler consists of a particulate filler selected from the groups consisting of talc, mica, wollastonite, chalk and caolin, and that the profile which is a heterophasic block copolymer comprising a propylene homopolymer matrix containing a rubbery propylene copolymer, that the thermopolastic moulding compound includes
(i) has a tensile modulus of at least 2000 MPa, determined according to DIN 53457;
(ii) has an impact strength of at least 20 kJ/m², determined according to ISO 179/leA/23°C;
(iii) has a welding factor of at least 0.7, determined according to DIN 53455; and
(iv) has a Vicat B softening point of at least 75°C, determined according to ASTM D 1525, condition B.

These and other features and advantages of the present invention will appear from the following description and the appended claims. For the sake of simplicity the following description refers to window profiles only.

### Detailed Description of the Invention

As mentioned above, the moulding compound comprises a propylene block copolymer. Particular details regarding this propylene block copolymer will be explained in more detail below together with details regarding its preparation.

The window profile should have a high stiffness, which means that it should have a high tensile modulus. More particularly the window profile should have a tensile modulus of at least 2000 MPa, determined according to DIN 53457. A high tensile modulus of the window profile is obtained by selecting a propylene block copolymer with a high tensile modulus. It is not possible, though, to achieve a tensile modulus of at least 2000 MPa with a propylene block copolymer only, and to further improve the tensile modulus and obtain the required value for the tensile modulus of the window profile, a particulate filler is added as will be described in more detail below.

In addition to a high tensile modulus of at least 2000 MPa, the window profile of the invention should have a high impact strength at 23°C of at least 20 kJ/m², determined according to ISO 179/1eA. Normally, a high impact strength and a high tensile modulus are contradictory properties of a material. In the present invention, however, a combination of a high tensile modulus and a high impact strength has been successfully achieved by using a propylene block copolymer, and more particularly a so-called heterophasic block copolymer comprising a propylene homopolymer matrix containing a rubbery propylene copolymer.

In order to be dimensionally stable and be able to retain its form during storage and handling the window profile should have a high softening point. As a measure hereof the window profile according to the invention should have a Vicat B softening point of at least 75°C, determined according to ASTM D 1525, condition B.

A further, very important property of window profiles of polymer materials is the weldability. Window profiles of wood are joined by screwing or gluing, while window profiles of polymer materials are joined by welding together the corners of the profiles. Such welding should be easy to carry out and result in a strong weld. The strength of the weld is determined in terms of the welding factor according to DIN 53455. The window profile according to the invention should have a welding factor of at least 0.7.

In addition to the above properties, the window profile according to the invention should also result in an acceptable corner strength when two profiles are welded together at an angle of 90° and tested according to DIN 50 014. This is achieved when the window profile has the above welding factor of at least 0.7.

The window profile of the invention may be any profile used to make a window, and is preferably a profile for a window frame or window casement.

A preferred window profile according to the present invention may be made of a moulding compound as described in the non-published International Patent Application PCT/EP98/08487 with an international filing date of 29 December 1998.

In such a preferred window profile, the moulding compound comprises a propylene block copolymer which includes two components A and B consisting of
A) 80-98 parts by weight of an isotactic polypropylene homopolymer as a coherent matrix component with a decade regularity of > 95%, and
B) 2-20 parts by weight of a copolymer consisting of 50-70 parts by weight of propylene and 30-50 parts by weight of ethylene and/or further C₄-C₈ alpha-olefins as a dispersed elastomeric component;
with a ratio of the intrinsic viscosities of the components B/A of 0.9 to 4.0 and a melt index of the moulding compound of 0.15 to 0.8 g/10 min.

The overall percentage of ethylene and/or further C₄-C₈ alpha-olefins, preferably ethylene, in the polypropylene block copolymer is 2.6-6.5 mole%, preferably 3.5-5.0 mole%.

Preferably, the propylene block copolymer contains 87-97 parts by weight of A and 3-13 parts by weight of B.

Preferably, also the melt index of the moulding compound is 0.2 to 0.5 g/10 min.

As described in the above mentioned International Patent Application, processes to enhance the stiffness and impact resistance of polypropylene are known in the patent literature. In particular, admixing of elastomers, widening of the molecular weight distribution, providing of reactor blends and the addition of nucleating agents have been disclosed. These methods, however, constitute only part solutions that do not lead to stiffness-impact resistance relations corresponding to the present demands.

According to the said International Patent Application, a polypropylene moulding compound is provided, which at the same time has a very high tensile modulus, stiffness and impact resistance.

In spite of the contradictory properties of stiffness and impact resistance which set a limit to the improvement of the properties of heterophasic polypropylene blends, a moulding compound was developed according to said International Patent Application from propylene and ethylene by using Ziegler-Natta catalysts in a two-stage polymerisation process, which moulding compound may be used to extrude pipes with high strength, high tensile modulus, and high impact strength. According to the present invention, it has been discovered that such a moulding compound may also be advantageously utilised for the preparing of window profiles.

The thermoplastic moulding compound of propylene and ethylene is prepared with the use of a stereospecific Ziegler-Natta catalyst and addition of hydrogen and with a preceding prepolymerisation, by
A) polymerisation of propylene at temperatures of 50-90°C and pressures of 2-5 MPa, and
B) polymerisation of the blend of this polypropylene homopolymer and newly added propylene and ethylene and/or further C₄-C₈ α-olefins at temperatures of 40-100°C and pressures of 0.5-3 MPa.

The polymerisation is carried out in two stages in two reactors arranged in series. A prepolymerisation precedes the first reactor. The prepolymer is e.g. transferred to a loop-reactor and the polymerisation is then carried out in a surplus of liquid propylene. The polypropylene homopolymer prepared in the first stage is separated and passed into the second reactor, where propylene and ethylene are added and the corresponding copolymer is obtained by gas-phase polymerisation as a disperse phase.

In order to regulate the molecular weight, hydrogen is added to the reaction system.

During the polymerisation the conditions mentioned below are used:
Polymerisation stare 1: Temperature: 50-90°C, preferably 60-80°C; Pressure: 2-5 MPa, preferably 2.5-4 MPa;
Polymerisation stage 2: Temperature 40-100°C, preferably 60-90°C; Pressure 0.5-3 MPa, preferably 1-2 MPa.

In order to prepare the moulding compound of the invention, a stereospecific Ziegler-Natta catalyst is used, which consists of several components, and besides a titanium-containing solid component also includes an aluminium alkyl compound and an external electron donor compound.

Fine particulate alumina, silica or magnesium chloride with a high specific surface area are used as support materials for the supported titanium halide, preferably titanium tetrachloride, and electron donors, e.g. ethers, ketones, lactones, alcohols, mono- or polyfunctional carboxylic acids and esters thereof, preferably phthalic acid derivatives. The titanium-containing solid component is available on the market and is prepared according to methods known from the literature (e.g. DE 43 30 661; EP 0 573 862; WO 96/11216; GALLI, Macromol. Symp. 112, 1-16 (1996)).

Trialkylaluminium compounds, e.g. triethylaluminium, are particularly suitable as cocatalysts.

In addition the catalyst system also contains an electron donor, and more particularly dicyclopentyl dimethoxysilane as a specific external electron donor. It has been discovered that this particular external electron donor seems to be necessary in order to confer a high isotacticity and consequently a high crystallinity to the polymer, which in turn gives the polymer a desired high stiffness.

In order to further improve the crystallinity of the propylene block copolymer and hence the stiffness of the inventive thermoplastic moulding compound, a nucleating agent is added. Preferably, 0.01-2.0 % by weight of one or more nucleating agents are added to the thermoplastic moulding compound. As examples of preferred nucleating agents to be used in the present invention, mention can be made of sodium benzoate, 2,2'-methylene-bis-(4,6-di-tert-butylphenyl)phosphate sodium salt which is marketed under the trade name ADK STAB NA 11 by Palmarole AG, Switzerland, and another metal salt of organic phosphite marketed under the trade name ADK STAB NA-21 by Palmarole AG, Switzerland.

As mentioned earlier, the moulding compound of the window profile according to the invention includes a particulate filler. The moulding compound includes 5-18 % by weight of filler, based on the weight of the moulding compound. The filler in the present invention is a particulate filler as opposed to a fibrous filler, such. as glass fibres or the like, which causes wear on the equipment for extrusion of the moulding compound and in addition has a negative influence on the weldability. The fillers are talc, mica, wollastonite, kaolin and chalk. Talc is a particularly preferred filler.

In order to further improve the processing and handling properties, other conventional additives, such as thermal stabilisers, antioxidants and/or light stabilising agents, antistatic agents, slip agents, pigments/dyes, metal deactivators, flame proofing agents, may be added in amounts that are conventional for such additives.

In order to illustrate and further facilitate the understanding of the invention, some non-limiting examples are given below.

### Example 1

The moulding compound was prepared continuously from propylene and ethylene in two polymerisation stages.

To this end, two serially connected reactors were used. During the polymerisation, predetermined temperatures, pressures and monomer ratios were maintained for the two polymerisation stages. Hydrogen was added as a molecular weight regulating agent.

A commercial supported Ziegler-Natta catalyst which is suitable for the preparation of polypropylene in monomer suspension and gas-phase was used for the polymerisation.

A separate prepolymerisation reactor was arranged before the first polymerisation reactor. In the prepolymerisation reactor, a prepolymerisation was carried out in liquid polypropylene at 15-20°C during 2-3 min followed by addition of solid catalyst component, triethyl aluminium (TEA) cocatalyst and dicyclopentyl dimethoxysilane (DPDMS) external electron donor. The resulting prepolymer was transferred to a loop reactor, where polymerisation with formation of polypropylene homopolymer was carried out in an excess of liquid propylene. The reactor contents were passed continuously to an intermediate container, where polypropylene and unreacted propylene were separated by evaporation of the monomers. Then the polypropylene homopolymer was transferred to the second reactor, where gas-phase polymerisation was carried out after feeding of a propylene-ethylene mixture to form the corresponding copolymer as a dispersely distributed phase.

In Table 1 the polymerisation conditions, monomer ratio and product properties are shown. The product properties were determined according to the following methods:
Melt flow rate (MFR): ISO 1133/temperature 230°C/loading 2.16 kg;
Ethylene content: Determination by infrared spectroscopy;
Intrinsic viscosity: Determination in dekalin at 135°C;
Decade regularity: Determination by infrared spectroscopy.

**TABLE 1**

| 1st Reactor | |
|---|---|
| Pressure, MPa | 3.3 |
| Temperature, °C | 70 |
| Hydrogen, ppm | 270 |
| TEA/silane, moles/moles | 4/1 |

| 2nd Reactor | |
|---|---|
| Pressure, MPa | 1.2 |
| Temperature, °C | 65 |
| C₂/(C₂+ C₃), mole % | 0.41 |
| H₂/C₂, mole % | 0.038 |

| Moulding compound | |
|---|---|
| MFR (230°C/2.16 kp), g/10 min | 0.23 |
| Ethylene content, mole % | 4.5 |
| " " , weight % | 3.1 |
| Intrinsic viscosity B/A, dl/g | 3.5 |
| Decade regularity, % | 96 |

To the resulting polypropylene polymer there were then added 0.15 % by weight of sodium benzoate (nucleating agent) and 12.5 % by weight of talc (filler) and 3.8% by weight of titanium dioxide (colour pigment) and the moulding compound was extruded by a single screw extruder (L/D = 30; D = 70 mm; 40 rpm) at a temperature of 220°C into a window profile.

The mechanical properties of the window profile were determined and found to be as follows:
Tensile modulus (DIN 53457): 2366 MPa;
Impact strength (ISO 179/leA/23°C): 33.9 kJ/m²;
Vicat B softening point (ASTM D 1525, condition B): 86.9°C;
Welding factor (DIN 53455; 205°C/8.7 bar) : 0.72

### Example 2 (Comparative)

In this Example a propylene block copolymer was prepared according to the method disclosed in Example 1, with the exception that instead of dicyclopentyl dimethoxysilane, cyclohexylmethyl dimethoxysilane was used as an external electron donor; that the overall ethylene content of the resulting polymer was 9.5 mole% instead of 4.5 mole%; that talc was added as a nucleating agent instead of sodium benzoate; and that 20 % by weight instead of 12.5 % by weight of talc was added as a filler.

The mechanical properties of the resulting window profile were determined and found to be as follows:
Tensile modulus (DIN 53457): 2397 MPa;
Impact strength (ISO 179/leA/23°C): 38.6 kJ/m²;
Vicat B softening point ((ASTM D 1525, condition B) : 72.7°C;
Welding factor (DIN 53455; 205°C/8.7 bar): 0.65.

From the results of Examples 1 and 2 it is evident that the thermoplastic moulding compound according to the invention provides an excellent window profile, which fulfils all the required criteria although only a small amount of filler is used. In comparison it was necessary to use a much higher amount of filler in the moulding compound of Example 2 and, yet, it did not succeed in achieving the softening point and the welding factor required for the window profile.

## Claims

1. A profile of a thermoplastic moulding compound for windows and doors, **characterised in that** the thermoplastic moulding compound comprises a propylene block copolymer which is a heterophasic block copolymer comprising a propylene homopolymer matrix containing a rubbery propylene copolymer, that the thermoplastic moulding compound includes a nucleating agent and from 5 to 18 % by weight of a filler, which filler consists of a particulate filler, said particulate filler being selected from the group consisting of talc, mica, wollastonite, chalk and kaolin and that the profile
(i) has a tensile modulus of at least 2000 MPa, determined according to DIN 53457;
(ii) has an impact strength of at least 20 kJ/m², determined according to ISO 179/leA/23 °C;
(iii) has a welding factor of at least 0.7, determined according to DIN 53455; and
(iv) has a Vicat B softening point of at least 75 °C, determined according to ASTM D 1525, condition B.

2. A profile according to claim 1, wherein the propylene block copolymer is a nucleated propylene polymer containing 0.01 - 2.0 % by weight of a nucleating agent.

3. A profile according to any one of the preceding claims, wherein the filler is talc.

4. A profile according to any one of the preceding claims, wherein the profile is selected from window frames and window casements, and door frames.

## Patentansprüche

1. Profil aus einer thermoplastischen Formmasse für Fenster und Türen, **dadurch gekennzeichnet,**
**dass** die thermoplastische Formmasse ein Propylen-Blockcopolymer umfasst, das ein Blockcopolymer mit verschiedenen Phasen ist, das eine Matrix aus einem Propylen-Homopolymer umfasst, die ein gummiartiges Propylen-Copolymer enthält,
**dass** die thermoplastische Formmasse ein keimbildendes Mittel und 5 bis 18 Gew.-% Füllstoff einschließt, wobei der Füllstoff aus einem partikelförmigen Füllstoff besteht, wobei der partikelförmige Füllstoff aus der Gruppe ausgewählt ist, die aus Talkum, Glimmer, Wollastonit, Kalk und Kaolin besteht, und
**dass** das Profil:
(i) einen Zugmodul, gemäß DIN 53457 bestimmt, von mindestens 2000 MPa aufweist,
(ii) eine Kerbschlagzähigkeit, gemäß ISO 179/IeA/23 °C bestimmt, von mindestens 20 kJ/m² hat,
(iii) einen Schweißfaktor, gemäß DIN 53455 bestimmt, von mindestens 0,7 aufweist, und
(iv) einen Vicat-Erweichungspunkt B, gemäß ASTM D 1525, Bedingung B bestimmt, von mindestens 75 °C hat.

2. Profil nach Anspruch 1, wobei das Propylen-Blockcopolymer ein Propylenpolymer mit initiierten Keimen ist, das 0,01 bis 2,0 Gew.-% Keimbildner enthält.

3. Profil nach einem der vorstehenden Ansprüche, wobei der Füllstoff Talkum ist.

4. Profil nach einem der vorstehenden Ansprüche, wobei das Profil aus Fensterrahmen und Fensterflügeln und Türstöcken ausgewählt ist.

## Revendications

1. Profilé d'un composé de moulage thermoplastique pour fenêtres et portes, **caractérisé en ce que** le composé de moulage thermoplastique comprend un copolymère bloc de propylène qui est un copolymère bloc hétérophasique comprenant une matrice d'homopolymère de propylène contenant un copolymère de propylène caoutchouteux, **en ce que** le composé de moulage thermoplastique comprend un agent de nucléation et de 5 à 18 % en poids d'une charge, et **en ce que** le profilé
(i) possède un module de traction d'au moins 2000 MPa, déterminé selon DIN 53457 ;
(ii) possède une résistance à l'impact d'au moins 20 kJ/m², déterminée selon ISO 179/IeA/23 °C ;
(iii) possède un facteur de soudage d'au moins 0,7, déterminé selon DIN 53455 ; et
(iv) possède un point de ramollissement Vicat B d'au moins 75 °C, déterminé selon ASTM D 1525, condition B.

2. Profilé selon la revendication 1, dans lequel le copolymère bloc de propylène est un polymère de propylène nucléé contenant 0,01 à 2,0 % en poids d'un agent de nucléation.

3. Profilé selon l'une quelconque des revendications précédentes, dans lequel la charge est le talc.

4. Profilé selon l'une quelconque des revendications précédentes, dans lequel le profilé est sélectionné parmi les bâtis de fenêtres et les châssis de fenêtres, et les cadres de portes.
